# EUROPÄISCHE PATENTSCHRIFT

(11) **EP 3 992 167 B1**
(45) Veröffentlichungstag und Bekanntmachung des Hinweises auf die Patenterteilung: **01.04.2026**
(21) Anmeldenummer: 21206210.3
(22) Anmeldetag: 03.11.2021
(51) Int. Cl.: C04B 20/02, C04B 28/02

(54) **VERFAHREN ZUM HERSTELLEN EINES BAUSTOFFES**
METHOD FOR MANUFACTURING A CONSTRUCTION MATERIAL
PROCÉDÉ DE FABRICATION D'UNE MATIÈRE DE CONSTRUCTION

(30) Priorität: 03.11.2020 DE 102020128894
(43) Veröffentlichungstag der Anmeldung: 04.05.2022
(73) Patentinhaber: Lobmeier, Jörg, 34295 Edermünde (DE); Kurkowski, Harald, 59494 Soest (DE)
(72) Erfinder: Lobmeier, Jörg, 34295 Edermünde (DE); Kurkowski, Harald, 59494 Soest (DE)
(74) Vertreter: Bremer, Ulrich

(56) Entgegenhaltungen:
- JP-A- 2004 292 300
- US-A1- 2011 000 400

## Beschreibung

Die Erfindung betrifft ein Verfahren zum Herstellen von Beton als Baustoff sowie eine Verwendung von gemahlener und konventionell aufbereiteter Hausmüll-Verbrennungs-Asche.

In der Betonherstellung wird normalerweise eine Mischung von mineralischen Komponenten, den Zuschlagstoffen bzw. der Gesteinskörnungen, beispielsweise Sand und Kies, und einem hydraulischen Bindemittel, das beispielsweise Zementklinker und weitere Stoffkomponenten (Zement-Zusatzstoffe) aufweist, eingesetzt. Das hydraulische Bindemittel sorgt hierbei für ein Abbinden und Erhärten der mineralischen Komponenten unter Zugabe von Wasser. Dem Beton können neben den Zuschlagstoffen und dem hydraulischen Bindemittel auch Beton-Zusatzmittel (< 5 M.-% des Zementanteils) oder Beton-Zusatzstoffe in größeren Mengenanteilen zugemischt sein, um bestimmte Eigenschaften des Betons zu beeinflussen.

Als hydraulisches Bindemittel kann beispielsweise Portlandzement verwendet werden, der aus Zementklinker und beispielsweise Gips als zusätzliche Stoffkomponente besteht. Der Zementklinker enthält kalk- und tonhaltige Rohstoffe, die fein gemahlen und bis zur Sinterung erhitzt werden. Anschließend wird dieser gesinterte Zementklinker erneut fein gemahlen und durch Beimischung von z.B. Gips als zusätzliche Stoffkomponente zu Portlandzement verarbeitet. Gips dient hierbei der Veränderung der Abbindezeit des hydraulischen Bindemittels. Als zusätzliche Stoffkomponenten bzw. als Zement-Zusatzstoffe können dem bereits gesinterten und anschließend fein gemahlenen Zementklinker beispielsweise Hüttensand (latent hydraulisch erhärtend) und/oder Flugaschen (künstliches Puzzolan), insbesondere Steinkohleflugaschen, aus Verbrennungs-Rückständen industrieller Verbrennungs-Anlagen beigemischt werden, um die Herstellungskosten des hydraulischen Bindemittels zu senken oder technische Eigenschaften zu beeinflussen. In der Zementindustrie kann ein solcher zusätzlicher Zement-Zusatzstoff beispielsweise auch als Hauptbestandteil oder Nebenbestandteil für Kompositzemente verwendet werden.

In DE 699 16 725 T2 wird zum Herstellen des Zementklinkers weiterhin Hausmüll-Verbrennungs-Asche (HMVA) verwendet. Diese wird dem Sintervorgang neben den kalk- und tonhaltigen Rohstoffen zugeführt, um die Asche des verbrannten Hausmülls wiederverwerten zu können. Durch den Sintervorgang werden dabei gezielt die Stoffeigenschaften der Hausmüll-Verbrennungs-Asche verändert, um insbesondere schädliche Materialien darin unschädlich zu machen. Nachteilig hierbei ist, dass der Herstellungsprozess des Zementklinkers bzw. des Zementes als Baustoff insgesamt sehr aufwändig ist, da die Hausmüll-Verbrennungs-Asche, die schädliche Materialien aufweist, einer zusätzlichen Behandlung bei hohen Temperaturen zu unterziehen ist.

In DE 693 06 651 T2 ist weiterhin vorgesehen, Klärschlamm oder Verbrennungsrückstände aus städtischem Müll, d.h. Hausmüll-Verbrennungs-Asche, in einem Schmelzofen aufzuschmelzen, um diese in Schmelzschlacke zu überführen. Dadurch werden die Stoffeigenschaften der Hausmüll-Verbrennungs-Asche zunächst verändert. Die abgekühlte Schmelzschlacke wird anschließend zu einem Zuschlagstoff/Gesteinskörnung als Mischbestandteil des Betons verarbeitet, wobei dazu ein Mahlvorgang vorgesehen ist. Auch hier ist der Herstellungsprozess des Baustoffes Beton sehr aufwändig, da das Aufschmelzen hohe Temperaturen erfordert und anschließend für die Weiterverarbeitung ein Abkühlen erforderlich ist.

In DE 196 41 308 A1 wird weiterhin vorgeschlagen, Schadstoffe in Filterstäuben aus der Hausmüllverbrennung zu Immobilisieren, indem die Filterstäube aus der Hausmüllverbrennung mit einem hydraulischen Bindemittel, das Zement und Hüttensand oder Flugasche als zusätzliche Zement-Zusatzstoffe enthält, vermischt wird. Dabei wird davon ausgegangen, dass die verwendeten Filterstäube aus der Hausmüllverbrennung einen gewollt hohen Schwermetallgehalt enthalten und als Sonderabfall eingestuft sind. Wie die Filterstäube aufbereitet werden, ist dabei nicht beschrieben.

In DE 10 2008 004 477 A1 wird vorgeschlagen, von der Hausmüll-Verbrennungs-Anlage angelieferte Hausmüll-Verbrennungs-Schlacke durch Abscheidung von metallischen Bestandteilen und Aussieben in einer trockenen Aufbereitung in unterschiedliche Kornklassen zu unterteilen und anschließend in einem nassen Aufbereitungsverfahren weiter aufzubereiten. Dadurch werden Produkte aus unterschiedlichen Kornklassen erhalten. Lediglich die feinkörnigen Sande in den Kornklassen 0/1 und 0/2 werden anschließend gemahlen und mit Branntkalk vermischt, um ein hydraulisches Bindemittel als Baustoff zu erzeugen, das die Eigenschaften eines Portlandzementes aufweist. Dabei dienen die gemahlenen Sande als Substitut für den Zementklinker, so dass der Baustoff (hydraulisches Bindemittel) selbst keinen Zementklinker aufweist.

Ein weiteres Verfahren ist in DE 10 2004 043 614 A9 offenbart, wobei darin auch die Verwendung von Hausmüll als Bestandteil des hydraulischen Bindemittels als Baustoff beschrieben ist. Dieser Hausmüll wird vor seiner Verbrennung zerkleinert, homogenisiert und mit kalziumhaltigen Additiven sowie mit Aluminiumoxid enthaltenden Komponenten vermischt und das Gemisch anschließend in der Müllverbrennungsanlage verbrannt. Nach einem Vermengen der so entstandenen Hausmüllverbrennungsasche (HMVA) mit Gerüstsilikaten wird dieses Gemenge auf eine Korngröße von 0,063mm aufgemahlen. Außerdem wird Feinschlacke aus Müllverbrennungsanlagen oder Hütten- oder Stahlwerkschlacke verwendet. Dies dient insgesamt der Herstellung eines hydraulischen Bindemittels als Baustoff zur Betonherstellung, das dem Zement ähnlich ist, dabei allerdings ohne Zementklinker als Hauptbestandteil auskommt.

Durch diesen beschriebenen Herstellungsprozess des hydraulischen Bindemittels als Baustoff soll sichergestellt werden, dass die im Hausmüll enthaltenen Schadstoffe in den Verband eingebunden werden und daher aus dem hydraulischen Bindemittel sowie dem damit hergestellten Beton als Baustoff schwer auslaugbar sind und daher keine nennenswerte Gefahr für die Umwelt darstellen. Nachteilig hierbei ist jedoch, dass insbesondere die Vorbehandlung des Hausmülls vor dem Hausmüll-Verbrennungsvorgang mit den Additiven und auch die danach durchgeführten Herstellungsschritte sehr aufwändig sind. Bestehende Hausmüll-Verbrennungs-Anlagen sind demnach entsprechend anzupassen, um mit der anfallenden Hausmüll-Verbrennungs-Asche ein Additiv für die Betonherstellung bereitzustellen.

In US 2011/000400 A1 und JP 2004 292300 A ist ferner beschrieben, bei der Herstellung von Zement Hausmüll-Verbrennungs-Asche zu verwenden.

Ausgehend davon ist die Aufgabe der Erfindung, ein Verfahren zum Herstellen von Beton als Baustoff anzugeben, der umweltfreundlich und einfach herstellbar ist. Aufgabe der Erfindung ist weiterhin eine Verwendung anzugeben.

Diese Aufgaben werden durch ein Verfahren und eine Verwendung gemäß den unabhängigen Ansprüchen gelöst. Die Unteransprüche geben bevorzugte Weiterbildungen an.

Dabei ist vorgesehen, dass ein nicht beanspruchter Baustoff, der je nach genauer Zusammensetzung in Form eines hydraulischen Bindemittels, insbesondere Zement, oder in Form von Beton, einschließlich Mörtel/Putz, vorliegen kann, als Zusatzstoff, der unter Zugabe von Wasser erhärtet, konventionell aufbereitete und gemahlene Hausmüll-Verbrennungs-Asche (HMVA) aufweist, die eine Korngröße von < 200 µm aufweist und (vorzugsweise lediglich) thermisch verbrannten Hausmüll enthält, und die außer bei der Verbrennung des Hausmülls bzw. nach der Verbrennung und der nachfolgenden Aufbereitung des Hausmülls bzw. nach dem Hausmüll-Verbrennungs-Prozess und der anschließenden Aufbereitung keiner die stofflichen Eigenschaften verändernden Maßnahmen unterzogen ist. Der Hausmüll wird also lediglich bei der Müllverbrennung selbst verbrannt und allenfalls dadurch in seinen Stoffeigenschaften verändert.

Erfindungsgemäß ist ein Verfahren zur Herstellung des Baustoffes, d.h. des Betons, einschließlich Putz/Mörtel, unter Verwendung des (Beton-)Zusatzstoffes, der unter Zugabe von Wasser erhärtet, d.h. der konventionell aufbereiteten und gemahlenen Hausmüll-Verbrennungs-Asche (HMVA), vorgesehen.

Es wird also herkömmlich aufbereitete Hausmüll-Verbrennungs-Asche, die aus einem herkömmlichen bzw. konventionellen Hausmüll-Verbrennungs-Prozess stammt,
- in gemahlener Form als unter Zugabe von Wasser erhärtender Beton-Zusatzstoff insbesondere neben dem hydraulischen Bindemittel, insbesondere Zement, für die Herstellung von Beton, was Putz und Mörtel mit einschließt, als Baustoff verwendet, oder gemäß einer nicht beanspruchten Ausführungsform auch
- direkt in gemahlener Form als unter Zugabe von Wasser erhärtender Zement-Zusatzstoff neben dem Zementklinker zum Herstellen von Zement als Baustoff verwendet.

Der jeweilige Baustoff weist also als Bestandteil des hydraulischen Bindemittels bzw. des Zementes in jedem Fall Zementklinker auf sowie ergänzend die Hausmüll-Verbrennungs-Asche als unter Zugabe von Wasser erhärtenden Zusatzstoff, die mit dem Zementklinker im fertigen Baustoff in irgendeiner Weise vermengt ist. Dies ist erfindungsgemäß bei Beton, insbesondere Frischbeton, als Baustoff der Fall, der in dem Fall neben der Hausmüll-Verbrennungs-Asche als unter Zugabe von Wasser erhärtendem Beton-Zusatzstoff und der Gesteinskörnung (Zuschlagstoff) auch Zement aufweist, so dass die Hausmüll-Verbrennungs-Asche im fertigen Baustoff "Beton" bzw. im "Frischbeton" auch mit dem darin enthaltenen Zementklinker vermengt ist (vor oder zumindest unmittelbar nach der Zugabe von Wasser). Im Folgenden wird davon ausgegangen, dass der Baustoff "Beton" bzw. "Frischbeton" auch Mörtel- und Putzanwendungen mit einschließt. Auch bei Zement als Baustoff (nicht beanspruchte Ausführung), beispielsweise Kompositzement, kann die Hausmüll-Verbrennungs-Asche als unter Zugabe von Wasser erhärtender Zusatzstoff mit dem Zementklinker vermengt sein bzw. werden.

Als Beton-Zusatzstoff wird hierbei ein Stoff verstanden, der den Zuschlagstoffen bzw. der Gesteinskörnung, beispielsweise Sand und Kies, und dem hydraulischen Bindemittel, z.B. Zement, neben dem Wasser zusätzlich zugefügt werden kann, um bestimmte Eigenschaften des Betons als Baustoff zu beeinflussen, beispielsweise eine Verarbeitbarkeit des Frischbetons und die Festigkeit und Dichtigkeit des Festbetons. In Abgrenzung zu einem Beton-Zusatzmittel ist die Zugabemenge des Beton-Zusatzstoffes so groß, dass sie bei der Stoffraumrechnung des Betons vorzugsweise zu berücksichtigen ist, während das Beton-Zusatzmittel in so geringen Mengen (< 5 M.-% des Zementanteils) zugegeben wird, dass sie als Raumanteil des Betons ohne Bedeutung sind.

In Abgrenzung zu einem Zuschlagstoff (Gesteinskörnung) des Betons, dessen Eigenschaften in DIN EN 12620 "Gesteinskörnungen für Beton" geregelt ist, gelten für Beton-Zusatzstoffe weitere Anforderungen, die in den Regelwerken an anderer Stelle aufgeführt sind.

Als Zement-Zusatzstoff wird ein Stoff verstanden, der dem fertigen Zementklinker, d.h. den gesinterten und anschließend gemahlenen kalk- und tonhaltigen Rohstoffen, als zusätzliche Stoffkomponente zugefügt werden kann, um die Eigenschaften des Zements als Baustoff und hydraulisches Bindemittel gezielt zu beeinflussen. Der Zement-Zusatzstoff wird also nicht dem Sinterungsprozess (Drehrohrofen) zugeführt und daher auch nicht derartig thermisch behandelt, dass sich seine Stoffeigenschaften verändern.

Grundsätzlich können den kalk- und tonhaltigen Rohstoffen vor dem Sintern aber auch weitere Rohstoffe beigemischt werden, um den gesinterten Zementklinker entsprechend zu beeinflussen. Allerdings unterscheiden sich diese weiteren Rohstoffe von den Zement-Zusatzstoffen, die ausschließlich dem fertigen Zementklinker beigemischt werden sollen.

Unter konventionell aufbereiteter Hausmüll-Verbrennungs-Asche wird erfindungsgemäß das aufbereitete Abprodukt aus einem konventionellen thermischen Hausmüll-Verbrennungs-Prozess verstanden, wobei aus dem Hausmüll-Verbrennungs-Prozess zunächst Hausmüll-Verbrennungs-Rohasche hervorgeht. Die Hausmüll-Verbrennungs-Rohasche (vor der Aufbereitung) fällt dabei vorzugsweise unter die Abfall-Schlüsselnummer AVV 19 01 12, d.h. enthält keine bedeutenden umwelttechnischen Schadstoffe. Die Hausmüll-Verbrennungs-Rohasche weist dabei vorzugsweise eine derartige Schadstofflast auf, dass eine Einstufung dieser Hausmüll-Verbrennungs-Rohasche in der LAGA-Einbauklasse kleiner gleich Z2 vorliegt.

Bei der konventionellen Aufbereitung der Hausmüll-Verbrennungs-Rohasche wird diese normalerweise von metallischen Bestandteilen sowie auch von unverbrannten oder ungenügend verbrannten Bestandteilen befreit, da die konventionell aufbereitete Hausmüll-Verbrennungs-Asche normalerweise umweltverträglich im Erd- und Straßenbau verwertet oder auf einer Deponie entsorgt werden soll. Dadurch weist die aufbereitete Hausmüll-Verbrennungs-Asche hauptsächlich mineralischen Bestandteile auf. Der unter Zugabe von Wasser erhärtende (Beton- oder Zement-) Zusatzstoff ist also derartig zusammengesetzt, dass sich keine umweltschädlichen Einflüsse ergeben, wenn dieser im jeweiligen Baustoff vorhanden ist. Zudem wirken sich die mineralischen Bestandteile positiv auf die Eigenschaften des unter Zugabe von Wasser erhärtenden Zusatzstoffes aus.

Die derartig konventionell aufbereitete Hausmüll-Verbrennungs-Asche, die anschließend aufgemahlen wird, wird vorteilhafterweise ohne eine weitere thermische Behandlung, durch die die Stoffeigenschaften der gemahlenen und konventionell aufbereiteten Hausmüll-Verbrennungs-Asche verändert werden, als unter Zugabe von Wasser erhärtender Zusatzstoff für die Herstellung des jeweiligen Baustoffes verwendet. Demnach ist als zusätzliche thermische Behandlung beispielsweise kein Aufschmelzen oder kein Sintern der gemahlenen und konventionell aufbereiteten Hausmüll-Verbrennungs-Asche vorgesehen. Es kann allenfalls ein Erhitzen des Baustoffes beispielsweise auf 100°C im Rahmen eines Trocknungsprozesses vorgesehen sein, bei dem der darin enthaltende unter Zugabe von Wasser erhärtende Zusatzstoff allerdings nicht auf derartig hohe Temperaturen (z.B. >500°C) erhitzt wird, dass sich eine stoffliche bzw. strukturelle Veränderung, z.B. eine Ummineralisierung, der Hausmüll-Verbrennungs-Asche ergibt.

Dies vereinfacht den Herstellungsprozess des Baustoffes und bewirkt auch keine weiteren umweltschädlichen Einflüsse, durch beispielsweise austretende schädliche Dämpfe bei der Herstellung. Zudem sind bestehende konventionelle Hausmüll-Verbrennungs-Anlagen bzw. konventionelle Hausmüll-Verbrennungs-Prozesse vorzugsweise nicht anzupassen oder zu erweitern, da unmittelbar auf die herkömmlich anfallende aufbereitete Hausmüll-Verbrennungs-Asche zurückgegriffen werden kann, die anschließend lediglich aufzumahlen ist.

Erfindungsgemäß wurde erkannt, dass für die konventionell aufbereitete Hausmüll-Verbrennungs-Asche bei der gegenwärtigen Zusammensetzung des Hausmülls häufig eine derartige Mineralogie vorliegt, dass sich die konventionell aufbereitete Hausmüll-Verbrennungs-Asche auch ohne eine nachträgliche stoffliche und strukturelle Veränderung als unter Zugabe von Wasser erhärtender Zusatzstoff in einem Baustoff eignet, wenn diese in gemahlener Form mit einer Korngröße von < 200µm vorliegt. Darunter ist zu verstehen, dass die konventionell aufbereitete und gemahlene Hausmüll-Verbrennungs-Asche unter Zugabe von Wasser aktiv ist und eine gewisse Festigkeit bzw. Festigkeitsentwicklung, d.h. eine Entwicklung zum Beispiel der Druckfestigkeit über die Zeit, sowie auch eine gewisse Raumbeständigkeit, d.h. eine schädliche Volumenausdehnung über die Zeit, aufweist, die bei einem Einsatz als unter Zugabe von Wasser erhärtender Zusatzstoff für eine entsprechend geforderte Qualität des jeweiligen Baustoffs sorgen kann.

Die Eignung als Beton- oder Zement-Zusatzstoff kann also vorzugsweise durch eine Prüfung der hydraulischen Aktivität und/oder der Festigkeit bzw. Festigkeitsentwicklung und/oder der Raumbeständigkeit der gemahlenen und konventionell aufbereiteten Hausmüll-Verbrennungs-Asche festgestellt werden. Durch eine entsprechende Auswahl der Hausmüll-Verbrennungs-Asche für diese hochwertige Verwendung kann also vorteilhafterweise eine hohe Qualität sichergestellt werden.

Eine raumbeständige Hausmüll-Verbrennungs-Asche liegt dabei im Regelfall dann vor, wenn an mit dem jeweiligen Baustoff hergestellten Prüfkörpern keine Risse oder Verwölbungen im Gemisch mit Zement oder Bindemittel und Wasser oder als fertig erhärteter Baustoff nach vorzugsweise 56-tägiger Lagerungszeit erkennbar sind. Eine ausreichende Festigkeitsentwicklung ist augenscheinlich beurteilbar, wenn die mit dem jeweiligen Baustoff hergestellten Prüfkörper nach dem Ausformen nicht auseinanderfallen und daran eine Festigkeitsprüfung durchgeführt werden kann.

Durch die Verwendung der konventionell aufbereiteten Hausmüll-Verbrennungs-Asche in einem Baustoff entschärft sich auch die Problematik der Lagerung und Beseitigung des Hausmülls bzw. der Hausmüll-Verbrennungs-Asche, da diese in gebundener, dichter Form weiterverwendet werden kann (Upcycling). Die gemahlene und konventionell aufbereitete Hausmüll-Verbrennungs-Asche kann außerdem zumindest einen Teil der unter Zugabe von Wasser erhärtenden Zusatzstoffe, die sonst in hydraulischen Bindemitteln (Zement) oder im Beton verwendet werden, in Gänze ersetzen, was die Herstellungs- und Anschaffungskosten reduziert und zudem die technischen Eigenschaften verbessern kann. Demnach kann beispielsweise Flugasche, insbesondere Steinkohleflugasche, als unter Zugabe von Wasser erhärtender Zusatzstoff im jeweiligen Baustoff durch die umweltverträgliche und günstige gemahlene und konventionell aufbereitete Hausmüll-Verbrennungs-Asche ersetzt werden.

Weiterhin wurde festgestellt, dass die gemahlene und konventionell aufbereitete Hausmüll-Verbrennungs-Asche einem Trass (Puzzolan), der in geringem Maße Gips aufweisen kann, ähnlich ist. Demnach kann die gemahlene und konventionell aufbereitete Hausmüll-Verbrennungs-Asche beispielsweise auch anstatt einem Trass als unter Zugabe von Wasser erhärtender Zusatzstoff im jeweiligen Baustoff eingesetzt werden.

Weiterhin ist vorgesehen, dass die gemahlene und konventionell aufbereitete Hausmüll-Verbrennungs-Asche hydraulisch und/oder latent hydraulisch und/oder carbonatisch (z.B. unter Zugabe von Wasser Calciumcarbonat bildend, was die Erhärtungsreaktion unterstützt) und/oder puzzolanisch ist. Dadurch können die Eigenschaften des jeweiligen Baustoffes ohne großen Aufwand nach dem Vermengen mit dem Zementklinker technisch beeinflusst werden. Demnach kann beispielsweise vorgesehen sein, dass die gemahlene und konventionell aufbereitete Hausmüll-Verbrennungs-Asche auch ohne Anregung durch weitere Stoffe hydraulisch erhärtet, wie beispielsweise Trass oder Steinkohleflugasche, und demnach derartige Puzzolane als unter Zugabe von Wasser erhärtende Zusatzstoffe ersetzen kann.

Vorzugsweise ist außerdem vorgesehen, dass die gemahlene und konventionell aufbereitete Hausmüll-Verbrennungs-Asche eine Korngröße von < 150 µm, insbesondere < 125 µm aufweist. Dadurch kann ein Vermengen mit dem Zementklinker und auch eine optimale Abbindung des damit hergestellten Baustoffes, d.h. Betons oder Zementes, sichergestellt werden.

Vorzugsweise ist weiterhin vorgesehen, dass die gemahlene und konventionell aufbereitete Hausmüll-Verbrennungs-Asche als dominante festigkeitsbildende Hauptbestandteile Quarz und Calcit, und ggf. auch die entsprechenden Hochtemperatur-Modifikationen, aufweist, wobei der Mengenanteil dieser beiden Hauptbestandteile in der aufbereiteten Hausmüll-Verbrennungs-Asche größer als 50% ist. Dadurch lässt sich auch die Umweltverträglichkeit und die Einstufung der verwendeten Hausmüll-Verbrennungs-Asche in der LAGA-Einbauklasse kleiner gleich Z2 für die Verwendung in der Betonindustrie beeinflussen. Diese Zusammensetzung ist dabei für Hausmüll-Verbrennungs-Asche gemäß AVV 19 01 12 heutzutage geläufig, so dass keine weiteren Trennvorgänge oder Siebvorgänge, o.ä. durchzuführen sind, sondern vielmehr auf die normalerweise bereitgestellte und in der Hausmüll-Verbrennungs-Anlage bereits konventionell aufbereitete Hausmüll-Verbrennungs-Asche nach Überprüfung der hydraulischen Aktivität bzw. nach Prüfung der Eignung als unter Zugabe von Wasser erhärtender Beton- oder Zement-Zusatzstoff zurückgegriffen werden kann.

Vorzugsweise ist weiterhin vorgesehen, dass die gemahlene und konventionell aufbereitete Hausmüll-Verbrennungs-Asche keine Additive, z.B. kalziumhaltige oder Aluminiumoxid enthaltende Additive, aufweist. Damit sind keine zusätzlichen Stoffe als Bestandteile der gemahlenen und konventionell aufbereiteten Hausmüll-Verbrennungs-Asche vorgesehen, die z.B. im Hausmüll-Verbrennungs-Prozess eingebracht werden und die die Stoffeigenschaften der Hausmüll-Verbrennungs-Asche z.B. im Rahmen des Verbrennungsprozesses beeinflussen. Das vereinfacht die Abstimmung und die Einstellung der stofflichen Eigenschaften des unter Zugabe von Wasser erhärtenden Zusatzstoffes. Die Stoffeigenschaften des unter Zugabe von Wasser erhärtenden Zusatzstoffes können aber unter Umständen durch weitere Zusatzstoffe oder Stoffkomponenten, die neben der gemahlenen und konventionell aufbereiteten Hausmüll-Verbrennungs-Asche im Baustoff enthalten sind, verändert werden. Diese sind dann aber nicht Bestandteil der gemahlenen und konventionell aufbereiteten Hausmüll-Verbrennungs-Asche, sondern werden nachträglich lediglich mit dieser und ggf. dem Zementklinker im jeweiligen Baustoff vermengt.

In einem erfindungsgemäßen Verfahren zum Herstellen eines Baustoffes sind mindestens die folgenden Schritte vorgesehen:
- Bereitstellen von zumindest Zementklinker als Bestandteil des fertigen Zementes sowie unabhängig davon Bereitstellen von konventionell aufbereiteter Hausmüll-Verbrennungs-Asche aus einem Hausmüll-Verbrennungs-Prozess, wobei die aufbereitete Hausmüll-Verbrennungs-Asche thermisch verbrannten Hausmüll aufweist,
- Aufmahlen der bereitgestellten konventionell aufbereiteten Hausmüll-Verbrennungs-Asche, vorzugsweise ohne Hinzufügen weiterer Stoffe, zum Herstellen eines hydraulisch erhärtenden Zusatzstoffes, wobei die konventionell aufbereitete Hausmüll-Verbrennungs-Asche (HMVA) auf eine Korngröße von < 200µm aufgemahlen wird;
- optional Trocknen der bereitgestellten konventionell aufbereiteten Hausmüll-Verbrennungs-Asche vor dem Aufmahlen und/oder optional Metallentfernung nach dem Aufmahlen;
- optional Prüfen, ob die (auf)gemahlene und/oder konventionell aufbereitete Hausmüll-Verbrennungs-Asche als unter Zugabe von Wasser erhärtender Zusatzstoff für den jeweiligen Baustoff geeignet ist, beispielsweise durch Prüfen einer hydraulischen Aktivität und/oder einer Festigkeit und/oder eines Festigkeitsverhaltens und/oder einer Raumbeständigkeit der (auf)gemahlenen und/oder konventionell aufbereiteten Hausmüll-Verbrennungs-Asche; und
- anschließendes Vermengen zumindest des Zementklinkers als Bestandteil des fertigen Zementes mit der gemahlenen und konventionell aufbereiteten Hausmüll-Verbrennungs-Asche zum Herstellen des Baustoffes aus einem Gemenge aus zumindest Zementklinker (als Bestandteil des fertigen Zementes) und mindestens einem unter Zugabe von Wasser erhärtenden Zusatzstoff,
wobei die gemahlene und konventionell aufbereitete Hausmüll-Verbrennungs-Asche außer bei der Verbrennung und der anschließenden Aufbereitung des Hausmülls keiner stofflichen Veränderung unterzogen wird bzw. nach dem konventionellen Hausmüll-Verbrennungs-Prozess keiner zusätzlichen thermischen Behandlung unterzogen wird.

Wird gemäß einer nicht beanspruchten Ausführungsform Zement, beispielsweise Kompositzement, als Baustoff hergestellt, können neben dem Zementklinker und der gemahlenen und konventionell aufbereiteten Hausmüll-Verbrennungs-Asche auch weitere unter Zugabe von Wasser erhärtende Zement-Zusatzstoffe, z.B. Hüttensand und/oder Flugasche, sowie auch Gips als zusätzliche Stoffkomponente hinzugefügt werden.

Wird erfindungsgemäß Beton, einschließlich Putz oder Mörtel, als Baustoff hergestellt, wird der Zementklinker als Bestandteil des fertigen Zementes bereitgestellt und das Gemenge aus zumindest Zementklinker (als Bestandteil des fertigen Zements) und gemahlener und konventionell aufbereiteter Hausmüll-Verbrennungs-Asche (unter Zugabe von Wasser erhärtender Beton-Zusatzstoff) erhalten, indem der Zement mit der Hausmüll-Verbrennungs-Asche vermischt wird. Unter Zugabe von Wasser kann dann zusammen mit weiteren Zuschlagstoffen (Gesteinskörnung) und ggf. weiterer Beton-Zusatzstoffe und/oder Beton-Zusatzmittel der Beton fertiggestellt werden, wobei zunächst Frischbeton, der auch noch den Zementklinker (als Bestandteil des fertigen Zementes) aufweist, und nach vollständiger Erhärtung Festbeton gebildet werden.

Vorzugsweise ist außerdem vorgesehen, dass die bereitgestellte konventionell aufbereitete Hausmüll-Verbrennungs-Asche eine Körnung oder ein Korngemisch von bis zu 0/56 mm aufweist, z.B. 0/2 mm, 0/8 mm, 4/16 mm oder 4/32 mm. Demnach sind vorteilhafterweise auch keine weiteren aufwändigen Siebvorgänge vorgesehen, da die konventionell aufbereitete Hausmüll-Verbrennungs-Asche aus einem herkömmlichen Hausmüll-Verbrennungs-Prozess normalerweise in diesen Korngrößen geliefert werden kann.

Vorzugsweise ist außerdem vorgesehen, dass die gemahlene und konventionell aufbereitete Hausmüll-Verbrennungs-Asche erneut einem Trennprozess unterzogen wird, wobei in dem Trennprozess gemahlene metallische Bestandteile entfernt werden. Demnach können vorteilhafterweise nach dem Mahlen weitere metallische Bestandteile extrahiert werden, die beispielsweise vor dem Mahlen im festen Verbund in der konventionell aufbereiteten Hausmüll-Verbrennungs-Asche in unterschiedlicher Korngröße vorhanden waren. Dadurch kann der Anteil der mineralischen Bestandteile und damit die Umweltverträglichkeit des unter Zugabe von Wasser erhärtenden Zusatzstoffes bzw. des damit hergestellten Baustoffes ggf. weiter erhöht werden.

Vorzugsweise ist außerdem vorgesehen, dass die gemahlene Hausmüll-Verbrennungs-Asche keine Additive enthält, die dem Hausmüll vor und/oder nach dem Hausmüll-Verbrennungs-Prozess oder die der Hausmüll-Verbrennungs-Asche vor und/oder nach dem Aufmahlen zugefügt werden.

Vorzugsweise ist weiterhin vorgesehen, dass in dem Verfahren zum Herstellen des Baustoffes keine Nassaufbereitung stattfindet, d.h. nach dem Bereitstellen der konventionell aufbereiteten Hausmüll-Verbrennungs-Asche aus dem Hausmüll-Verbrennungs-Prozess sind keine nassen Aufbereitungsstufen vorgesehen, um einen Einsatz der konventionell aufbereiteten Hausmüll-Verbrennungs-Asche für den jeweiligen Baustoff zu gewährleisten. Vielmehr findet nach der Bereitstellung der konventionell aufbereiteten Hausmüll-Verbrennungs-Asche lediglich eine Trockenaufbereitung statt, um den jeweiligen Baustoff zu erhalten.

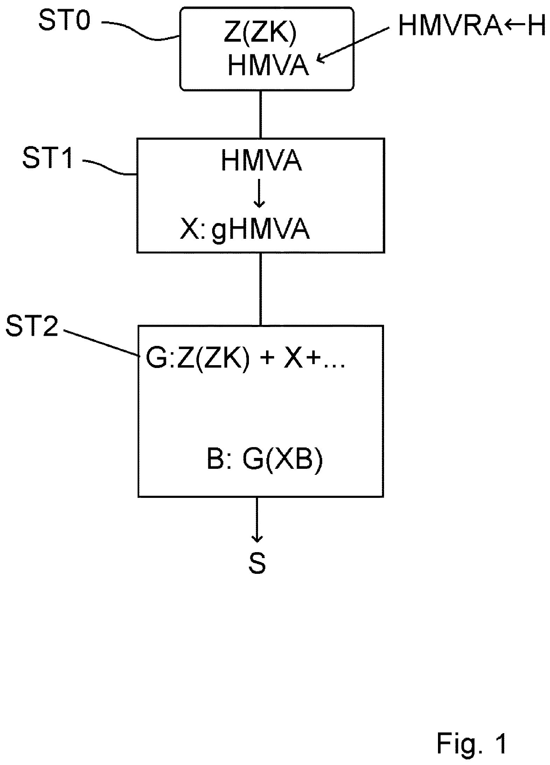

Die Erfindung wird im Folgenden anhand der einzigen Fig. 1 näher erläutert.

Zunächst ist vorgesehen, Hausmüll-Verbrennungs-Asche HMVA bereitzustellen, die in einem herkömmlichen Hausmüll-Verbrennungs-Prozess in einer anschließenden Hausmüll-Verbrennungs-Anlage in aufbereiteter Form anfällt. Im Hausmüll-Verbrennungs-Prozess wird der Hausmüll H (Siedlungsabfall) bei Temperaturen von beispielsweise 800-1200°C verbrannt, so dass aus einem Verbrennungsraum der Hausmüll-Verbrennungs-Anlage zunächst Hausmüll-Verbrennungs-Rohasche HMVRA zurückbleibt, die nachfolgend abgekühlt wird, beispielsweise in einem Wasserbad (Nassentschlacker). Die Hausmüll-Verbrennungs-Rohasche HMVRA besteht zu einem großen Anteil (> 80%) aus mineralischen Bestandteilen, zu einem kleinen Anteil (<10%) aus metallischen Bestandteilen und zu einem geringen Anteil (<5%) aus unverbrannten oder ungenügend verbrannten Bestandteilen.

In einem anschließenden Aufbereitungsprozess wird die so erhaltene Hausmüll-Verbrennungs-Rohasche HMVRA zunächst von den metallischen sowie den unverbrannten oder ungenügend verbrannten Bestandteilen weitestgehend getrennt. Dazu findet beispielsweise eine manuelle Abtrennung sowie eine Metallabtrennung mittels Magnetvorrichtungen, beispielsweise Magnet- und Wirbelstromabscheidern, statt. Der dadurch zu Hausmüll-Verbrennungs-Asche HMVA aufbereitete Rückstand wird in einem nachfolgenden Siebprozess in Korngemische von z.B. 0/32 mm bis 0/56 mm oder auch enger gestuften Körnungen/Körnungsgemischen, z.B. 0/2 mm, 0/8mm, 2/8 mm, 4/16mm, 4/32mm, 8/16 mm und 16/32 mm fraktioniert. Diese aufbereitete und gesiebte Hausmüll-Verbrennungs-Asche HMVA wird anschließend als unter Zugabe von Wasser erhärtender Zusatzstoff X zur Herstellung eines Baustoffes S, z.B. Beton B, einschließlich Putz/Mörtel, oder Zement Z, verwendet. Diese Hausmüll-Verbrennungs-Asche HMVA weist aufgrund der Aufbereitung nahezu keine metallischen Bestandteile mehr auf.

Für die erfindungsgemäße Herstellung des Baustoffes S werden weder dem Hausmüll H vor dem Hausmüll-Verbrennungs-Prozess, noch der Hausmüll-Verbrennungs-Rohasche HMVRA vor dem Aufbereiten und noch der Hausmüll-Verbrennungs-Asche HMVA nach dem Aufbereiten zusätzliche Bestandteile bzw. Additive hinzugefügt, die die stoffliche Zusammensetzung und dadurch die Stoffeigenschaften der mineralischen Hausmüll-Verbrennungs-Asche HMVA verändern. Die Hausmüll-Verbrennungs-Anlage sowie der Hausmüll-Verbrennungs-Prozess mit anschließender konventioneller Aufbereitung sind also nicht anzupassen, so dass auf die von einer herkömmlichen Hausmüll-Verbrennungs-Anlage bereitgestellte Hausmüll-Verbrennungs-Asche HMVA zurückgegriffen werden kann, die normalerweise für eine Verwertung im Erd- und Straßenbau oder die Ablage auf einer Deponie vorgesehen ist. Dazu fällt die Hausmüll-Verbrennungs-Rohasche HMVRA (vor der Aufbereitung) unter die Abfall-Schlüsselnummer AVV 19 01 12, d.h. sie enthält keine bedeutenden umwelttechnischen Schadstoffe. Die Hausmüll-Verbrennungs-Rohasche weist dabei eine derartige Schadstofflast auf, dass eine Einstufung dieser Hausmüll-Verbrennungs-Rohasche HMVRA in der LAGA-Einbauklasse kleiner gleich Z2 vorliegt.

Im Rahmen der Erfindung wird die derartig gewonnene Hausmüll-Verbrennungs-Asche HMVA auch als herkömmliche bzw. "konventionell aufbereitete Hausmüll-Verbrennungs-Asche HMVA" bezeichnet, die lediglich verbrannten Hausmüll H und keine Additive zur Änderung der Stoffeigenschaft bei der Verarbeitung enthält.

Die derartig in einem anfänglichen Schritt ST0 bereitgestellte konventionell aufbereitete Hausmüll-Verbrennungs-Asche HMVA wird in einem ersten Schritt ST1 des erfindungsgemäßen Herstellungsverfahrens des Baustoffes S einem Mahlvorgang unterzogen. Die in der entsprechenden Korngröße von z.B. 0/4 oder 0/32 mm bereitgestellte konventionell aufbereitete Hausmüll-Verbrennungs-Asche HMVA wird dadurch also in eine pulverige Form gebracht, die zu einem gemahlenen Stoff mit Zementfeinheit führt, d.h. mit einer Korngröße von erfindungsgemäß < 200µm, insbesondere < 125µm oder auch kleiner. Gegebenenfalls ist die Hausmüll-Verbrennungs-Asche HMVA zuvor zu trocknen oder auch anschließend noch von metallischen Anteilen zu befreien. Weiterhin kann die bereitgestellte konventionell aufbereitete Hausmüll-Verbrennungs-Asche HMVA in einem Zwischenschritt vor dem Aufmahlen auch noch gebrochen werden, beispielsweise in einer Hammermühle oder Prallmühle, um vorbereitend eine Sandfeinheit zu erreichen.

In einem Prüfvorgang kann vor oder nach dem Aufmahlen weiterhin ermittelt werden, ob sich die so gewonnene Hausmüll-Verbrennungs-Asche als unter Zugabe von Wasser erhärtender Zusatzstoff X eignet oder nicht.

Damit lässt sich die gemahlene und konventionell aufbereitete Hausmüll-Verbrennungs-Asche gHMVA als unter Zugabe von Wasser erhärtender (hydraulisch, latent hydraulisch, carbonatisch oder puzzolanisch) Zusatzstoff X für Zement Z (nicht beanspruchte Ausführung) bzw. für Beton B, einschließlich Putz/Mörtel, auf der Betonmisch- oder Zementanlage einsetzen. Dazu kann die gemahlene Hausmüll-Verbrennungs-Asche gHMVA in einem folgenden zweiten Schritt ST2 mit zumindest separat bereitgestelltem Zementklinker ZK, der als Einzelstoff oder als Bestandteil von Zement Z bereitgestellt wird, und ggf. weiteren Stoffen vermengt werden. Dieses Gemenge G ist dabei Bestandteil des jeweiligen Baustoffes S, der hergestellt werden soll.

Wird Zement Z, beispielsweise Kompositzement, als Baustoff S hergestellt (nicht beanspruchte Ausführung), können neben dem Zementklinker ZK und der gemahlenen und konventionell aufbereiteten Hausmüll-Verbrennungs-Asche gHMVA (unter Zugabe von Wasser erhärtender Zement-Zusatzstoff XZ) auch weitere unter Zugabe von Wasser erhärtende Zement-Zusatzstoffe XZ, z.B. Hüttensand und/oder Flugasche, sowie auch Gips als zusätzliche Stoffkomponente hinzugefügt werden.

Wird Beton B als Baustoff S hergestellt, wird der Zementklinker ZK als Bestandteil des fertigen Zementes Z bereitgestellt und das Gemenge G aus zumindest Zementklinker ZK (als Bestandteil des fertigen Zementes) und gemahlener und konventionell aufbereiteter Hausmüll-Verbrennungs-Asche gHMVA (unter Zugabe von Wasser erhärtender Beton-Zusatzstoff XB) erhalten, indem der Zement Z mit der gemahlenen Hausmüll-Verbrennungs-Asche gHMVA vermischt wird. Unter Zugabe von Wasser, was erfindungsgemäß erst an der Betonmischanlage erfolgt, kann dann zusammen mit weiteren Zuschlagstoffen und/oder Beton-Zusatzmitteln und/oder Beton-Zusatzstoffen XB der Beton B fertiggestellt werden, erfindungsgemäß an der Betonmischanlage, wobei sich zunächst Frischbeton und anschließend Festbeton bildet.

Über den Anteil an unter Zugabe von Wasser erhärtenden Zusatzstoffen X; XZ, XB im jeweiligen Baustoff S; Z, B, insbesondere der gemahlenen Hausmüll-Verbrennungs-Asche gHMVA, können die technischen Eigenschaften des jeweiligen Baustoffs S; Z, B gezielt eingestellt werden.

Die Hausmüll-Verbrennungs-Asche HMVA wird hierbei nach dem Hausmüll-Verbrennungs-Prozess keinem weiteren Temperatur-Behandlungsschritt unterzogen bzw. nicht thermisch behandelt, insbesondere nicht gesintert oder geschmolzen, weder vor dem Vermengen mit dem Zementklinker ZK noch danach. Die konventionell aufbereitete Hausmüll-Verbrennungs-Asche HMVA wird also beim erfindungsgemäßen Herstellungsverfahren auch nicht im Rahmen einer Herstellung von Zementklinker ZK eingesetzt, bei der die jeweiligen Stoffe im Drehrohrofen stark erhitzt werden. Nach dem Vermengen wird das Gemenge G also unmittelbar, d.h. ohne eine weitere thermische Behandlung, als Bestandteil des jeweiligen Baustoffes S eingesetzt.

Ferner ist vorgesehen, dass im Verfahren zum Herstellen des Baustoffes S keine Nassaufbereitung stattfindet, d.h. nach dem Bereitstellen der konventionell aufbereiteten Hausmüll-Verbrennungs-Asche HMVA aus dem Hausmüll-Verbrennungsprozess sind keine nassen Aufbereitungsstufen vorgesehen, um einen Einsatz der konventionell aufbereiteten Hausmüll-Verbrennungs-Asche HMVA für den jeweiligen Baustoff S zu gewährleisten. Vielmehr findet lediglich eine Trockenaufbereitung statt, um den jeweiligen Baustoff S zu erhalten.

## Patentansprüche

1. Verfahren zum Herstellen von Beton (B) als Baustoff (S), insbesondere Frischbeton mit mindestens den folgenden Schritten:
- Bereitstellen von zumindest fertigem Zement, enthaltend Zementklinker (ZK), sowie unabhängig davon Bereitstellen von konventionell aufbereiteter Hausmüll-Verbrennungs-Asche (HMVA) aus einem Hausmüll-Verbrennungs-Prozess, wobei die aufbereitete Hausmüll-Verbrennungs-Asche (HMVA) thermisch verbrannten Hausmüll (H) aufweist (ST0);
- Aufmahlen der bereitgestellten konventionell aufbereiteten Hausmüll-Verbrennungs-Asche (HMVA) zum Herstellen eines unter Zugabe von Wasser erhärtenden Beton-Zusatzstoffes (XB) (ST1), wobei die konventionell aufbereitete Hausmüll-Verbrennungs-Asche (HMVA) auf eine Korngröße von < 200µm aufgemahlen wird; und
- anschließendes Vermengen des fertigen Zements (Z) mit der gemahlenen und konventionell aufbereiteten Hausmüll-Verbrennungs-Asche (gHMVA) als Beton-Zusatzstoff (XB) an einer Betonmischanlage, so dass ein Gemenge (G) aus zumindest Zement (Z) und gemahlener und konventionell aufbereiteter Hausmüll-Verbrennungs-Asche (gHMVA) entsteht,
wobei die gemahlene und konventionell aufbereitete Hausmüll-Verbrennungs-Asche (gHMVA) außer bei der Verbrennung des Hausmülls (H) und/oder nach der Verbrennung und der konventionellen Aufbereitung des Hausmülls (H) keiner stofflichen Veränderung und/oder thermischen Behandlung unterzogen wird; und
- Fertigstellen des Betons (B) unter Zugabe von Wasser und Zuschlagstoffen.

2. Verfahren nach Anspruch 1, **dadurch gekennzeichnet, dass** die bereitgestellte konventionell aufbereitete Hausmüll-Verbrennungs-Asche (HMVA) vor dem Aufmahlen in Korngemische von 0/32 mm bis 0/56 mm oder in Korngrößen von 0/2 mm, 0/8mm, 2/8 mm, 4/16mm, 4/32mm, 8/16 mm oder 16/32 mm fraktioniert wird.

3. Verfahren nach einem der Ansprüche 1 oder 2, **dadurch gekennzeichnet, dass** die konventionell aufbereitete Hausmüll-Verbrennungs-Asche (HMVA) auf eine Korngröße <150 µm, insbesondere < 125µm aufgemahlen wird.

4. Verfahren nach einem der vorhergehenden Ansprüche, **dadurch gekennzeichnet, dass** die gemahlene und konventionell aufbereitete Hausmüll-Verbrennungs-Asche (gHMVA) keine Additive enthält, die dem Hausmüll (H) vor und/oder nach dem Hausmüll-Verbrennungs-Prozess oder die der Hausmüll-Verbrennungs-Asche (HMVA) vor und/oder nach dem Aufmahlen zugefügt werden.

5. Verfahren nach einem der vorhergehenden Ansprüche, **dadurch gekennzeichnet, dass** die gemahlene und konventionell aufbereitete Hausmüll-Verbrennungs-Asche (gHMVA) nicht gesintert oder geschmolzen wird, insbesondere nicht auf eine Temperatur von größer als 150°C erhitzt wird.

6. Verfahren nach einem der vorhergehenden Ansprüche, **dadurch gekennzeichnet, dass** in dem Verfahren zum Herstellen des Betons (B) nach der Bereitstellung der konventionell aufbereiteten Hausmüll-Verbrennungs-Asche (HMVA) keine Nassaufbereitung und lediglich eine Trockenaufbereitung der konventionell aufbereiteten Hausmüll-Verbrennungs-Asche (HMVA) stattfindet.

7. Verfahren nach einem der vorhergehenden Ansprüche, **dadurch gekennzeichnet, dass** die gemahlene und konventionell aufbereitete Hausmüll-Verbrennungs-Asche (gHMVA) hydraulisch und/oder latent hydraulisch und/oder carbonatisch und/oder puzzolanisch ist.

8. Verfahren nach einem der vorhergehenden Ansprüche, **dadurch gekennzeichnet, dass** die gemahlene und konventionell aufbereitete Hausmüll-Verbrennungs-Asche (gHMVA) als dominante festigkeitsbildende Hauptbestandteile Quarz und Calcit aufweist, wobei der Mengenanteil der beiden Hauptbestandteile Quarz und Calcit in der aufbereiteten Hausmüll-Verbrennungs-Asche größer als 50% ist.

9. Verfahren nach einem der vorhergehenden Ansprüche, **dadurch gekennzeichnet, dass** die gemahlene und konventionell aufbereitete Hausmüll-Verbrennungs-Asche (gHMVA) lediglich thermisch verbrannten Hausmüll (H) enthält und/oder zumindest keine Additive, z.B. kalziumhaltige oder Aluminiumoxid enthaltende Additive, aufweist.

10. Verfahren nach einem der vorhergehenden Ansprüche, **dadurch gekennzeichnet, dass** die gemahlene und konventionell aufbereitete Hausmüll-Verbrennungs-Asche (gHMVA) unter die Abfall-Schlüsselnummer AVV 19 01 12 fällt und/oder eine derartige Schadstofflast aufweist, dass eine Einstufung der gemahlenen und konventionell aufbereiteten Hausmüll-Verbrennungs-Rohasche (gHMVA) in der LAGA-Einbauklasse kleiner gleich Z2 vorliegt.

11. Verwendung von gemahlener und konventionell aufbereiteter Hausmüll-Verbrennungs-Asche (gHMVA) als Beton-Zusatzstoff (XB), der unter Zugabe von Wasser erhärtet, zum Herstellen von Beton (B), wobei zumindest Zementklinker (ZK) als Bestandteil von fertigem Zement (Z) mit Zuschlagstoffen und der gemahlenen und konventionell aufbereiteten Hausmüll-Verbrennungs-Asche (gHMVA) als Beton-Zusatzstoff (XB), der unter Zugabe von Wasser erhärtet, vermengt und der Beton (B) anschließend unter Zugabe von Wasser fertiggestellt wird, wobei die gemahlene und konventionell aufbereitete Hausmüll-Verbrennungs-Asche (gHMVA) eine Korngröße von < 200µm aufweist und außer bei der Verbrennung des Hausmülls (H) und/oder nach der Verbrennung und der konventionellen Aufbereitung des Hausmülls (H) keiner stofflichen Veränderung und/oder thermischen Behandlung unterzogen wird.

## Claims

1. Method for producing concrete (B) as a construction material (S), in particular fresh concrete, comprising at least the following steps:
providing at least cement, containing cement clinker (ZK), and independently thereof providing conventionally processed household waste incineration ash (HMVA) from a household-waste incineration process, wherein the processed household waste incineration ash (HMVA) comprises thermally incinerated household waste (H) (ST0);
grinding the provided conventionally processed household waste incineration ash (HMVA) to produce a concrete additive (XB) that hardens upon addition of water (ST1), wherein the conventionally processed household waste incineration ash (HMVA) is ground to a particle size of < 200 µm; and
subsequently mixing the cement (Z) with the ground and conventionally processed household waste incineration ash (gHMVA) as the concrete additive (XB) at a concrete mixing plant, so that a mixture (G) of at least cement (Z) and ground and conventionally processed household waste incineration ash (gHMVA) is formed,
wherein the ground and conventionally processed household waste incineration ash (gHMVA), apart from during the incineration of the household waste (H) and/or after the incineration and the conventional processing of the household waste (H), is not subjected to any material change and/or thermal treatment; and
completing the concrete (B) by adding water and aggregates.

2. Method according to claim 1, **characterized in that** the provided conventionally processed household waste incineration ash (HMVA) is fractionated, before grinding, into grain-size mixtures of 0/32 mm to 0/56 mm or into grain-size fractions of 0/2 mm, 0/8 mm, 2/8 mm, 4/16 mm, 4/32 mm, 8/16 mm or 16/32 mm.

3. Method according to one of claims 1 or 2, **characterized in that** the conventionally processed household waste incineration ash (HMVA) is ground to a particle size of < 150 µm, in particular < 125 µm.

4. Method according to one of the preceding claims, **characterized in that** the ground and conventionally processed household waste incineration ash (gHMVA) contains no additives that are added to the household waste (H) before and/or after the household-waste incineration process, or that are added to the household waste incineration ash (HMVA) before and/or after grinding.

5. Method according to one of the preceding claims, **characterized in that** the ground and conventionally processed household waste incineration ash (gHMVA) is not sintered or melted, in particular is not heated to a temperature of more than 150°C.

6. Method according to one of the preceding claims, **characterized in that**, in the method for producing the concrete (B), after providing the conventionally processed household waste incineration ash (HMVA), no wet processing is performed and only dry processing of the conventionally processed household waste incineration ash (HMVA) is carried out.

7. Method according to one of the preceding claims, **characterized in that** the ground and conventionally processed household waste incineration ash (gHMVA) is hydraulic and/or latently hydraulic and/or carbonatic and/or pozzolanic.

8. Method according to one of the preceding claims, **characterized in that** the ground and conventionally processed household waste incineration ash (gHMVA) has, as dominant strength-forming main constituents, quartz and calcite, wherein the mass fraction of the two main constituents quartz and calcite in the processed household waste incineration ash is greater than 50%.

9. Method according to one of the preceding claims, **characterized in that** the ground and conventionally processed household waste incineration ash (gHMVA) contains only thermally incinerated household waste (H) and/or comprises at least no additives, e.g. calcium-containing or aluminium-oxide-containing additives.

10. Method according to one of the preceding claims, **characterized in that** the ground and conventionally processed household waste incineration ash (gHMVA) falls under waste code AVV 19 01 12 and/or has such a pollutant load that the ground and conventionally processed household waste incineration raw ash (gHMVA) is classified in LAGA installation class ≤ Z2.

11. Use of ground and conventionally processed household waste incineration ash (gHMVA) as a concrete additive (XB) that hardens upon addition of water, for producing concrete (B), wherein at least cement clinker (ZK) as a constituent of cement (Z) is mixed with aggregates and with the ground and conventionally processed household waste incineration ash (gHMVA) as the concrete additive (XB) that hardens upon addition of water, and the concrete (B) is subsequently completed by adding water, wherein the ground and conventionally processed household waste incineration ash (gHMVA) has a particle size of < 200 µm and, apart from during the incineration of the household waste (H) and/or after the incineration and the conventional processing of the household waste (H), is not subjected to any material change and/or thermal treatment.

## Revendications

1. Procédé de fabrication de béton (B) en tant que matériau de construction (S), en particulier de béton frais, comprenant au moins les étapes suivantes :
- fourniture d'au moins du ciment prêt à l'emploi contenant du clinker de ciment (ZK), ainsi que, indépendamment de cela, fourniture de cendres d'incinération de déchets ménagers (HMVA) traitées de manière conventionnelle issues d'un processus d'incinération de déchets ménagers, les cendres d'incinération de déchets ménagers (HMVA) traitées contenant des déchets ménagers (H) incinérés thermiquement (Étape 0) ;
- broyage des cendres d'incinération de déchets ménagers (HMVA) traitées de manière conventionnelle fournies afin de produire un additif pour béton (XB) durcissant à l'ajout d'eau (Étape 1), les cendres d'incinération de déchets ménagers (HMVA) traitées de manière conventionnelle étant broyées à une granulométrie inférieure à 200 µm ; et
- mélange ultérieur du ciment (Z) fini avec les cendres d'incinération de déchets ménagers broyées (gHMVA) et traitées de manière conventionnelle en tant qu'additif pour béton (XB) dans une centrale à béton, de manière à obtenir un mélange (G) composé au moins de ciment (Z) et de cendres d'incinération de déchets ménagers broyées (gHMVA) et traitées de manière conventionnelle,
les cendres d'incinération de déchets ménagers broyées (gHMVA) et traitées de manière conventionnelle n'étant soumises à aucune modification matérielle et/ou traitement thermique, sauf lors de l'incinération des déchets ménagers (H) et/ou après l'incinération et le traitement conventionnel des déchets ménagers (H) ; et
- finition du béton (B) par ajout d'eau et d'agrégats.

2. Procédé selon la revendication 1, **caractérisé en ce que** les cendres d'incinération de déchets ménagers (HMVA) traitées de manière conventionnelle sont fractionnées avant le broyage en mélanges de grains de 0/32 mm à 0/56 mm ou à une granulométrie de 0/2 mm, 0/8 mm, 2/8 mm, 4/16 mm, 4/32 mm, 8/16 mm ou 16/32 mm.

3. Procédé selon l'une des revendications 1 ou 2, **caractérisé en ce que** les cendres d'incinération de déchets ménagers (HMVA) traitées de manière conventionnelle sont broyées à une granulométrie inférieure à 150 µm, en particulier inférieure à 125 µm.

4. Procédé selon l'une des revendications précédentes, **caractérisé en ce que** les cendres d'incinération de déchets ménagers broyées (gHMVA) et traitées de manière conventionnelle ne contiennent aucun additif ajouté aux déchets ménagers (H) avant et/ou après le processus d'incinération de déchets ménagers ou aux cendres d'incinération de déchets ménagers (HMVA) avant et/ou après le broyage.

5. Procédé selon l'une des revendications précédentes, **caractérisé en ce que** les cendres d'incinération de déchets ménagers broyées (gHMVA) et traitées de manière conventionnelle ne sont pas frittées ou fondues, et en particulier ne sont pas chauffées à une température supérieure à 150°C.

6. Procédé selon l'une des revendications précédentes, **caractérisé en ce que**, dans le procédé de fabrication du béton (B), après la fourniture des cendres d'incinération de déchets ménagers (HMVA) traitées de manière conventionnelle, aucun traitement humide n'est effectué et seul un traitement à sec des cendres d'incinération de déchets ménagers (HMVA) traitées de manière conventionnelle est effectué.

7. Procédé selon l'une des revendications précédentes, **caractérisé en ce que** les cendres d'incinération de déchets ménagers broyées (gHMVA) et traitées de manière conventionnelle sont hydrauliques et/ou latentes hydrauliques et/ou carbonatées et/ou pouzzolaniques.

8. Procédé selon l'une des revendications précédentes, **caractérisé en ce que** les cendres d'incinération de déchets ménagers broyées (gHMVA) et traitées de manière conventionnelle contiennent, comme composants principaux dominants renforçant la résistance, du quartz et de la calcite, la proportion des deux composants principaux quartz et calcite dans les cendres d'incinération de déchets ménagers traitées étant supérieure à 50 %.

9. Procédé selon l'une des revendications précédentes, **caractérisé en ce que** les cendres d'incinération de déchets ménagers broyées (gHMVA) et traitées de manière conventionnelle contiennent uniquement des déchets ménagers (H) incinérés thermiquement et/ou sont au moins sans additif, par exemple sans additifs contenant du calcium ou de l'oxyde d'aluminium.

10. Procédé selon l'une des revendications précédentes, **caractérisé en ce que** les cendres d'incinération de déchets ménagers broyées (gHMVA) et traitées de manière conventionnelle relèvent du code de déchet AVV 19 01 12 et/ou présentent une charge polluante telle que les cendres brutes d'incinération de déchets ménagers broyées (gHMVA) et traitées de manière conventionnelle sont classées dans la classe d'installation LAGA inférieure ou égale à Z2.

11. Utilisation de cendres d'incinération de déchets ménagers broyées (gHMVA) et traitées de manière conventionnelle comme additif pour béton (XB) qui durcit après ajout d'eau, pour la fabrication de béton (B), dans laquelle au moins le clinker de ciment (ZK) en tant que composant du ciment (Z) prêt à l'emploi est mélangé avec des agrégats et les cendres d'incinération de déchets ménagers broyées (gHMVA) et traitées de manière conventionnelle en tant qu'additif pour béton (XB) qui durcit après ajout d'eau, et le béton (B) est ensuite préparé après ajout d'eau, les cendres d'incinération de déchets ménagers broyées (gHMVA) et traitées de manière conventionnelle ayant une granulométrie inférieure à 200 µm et n'étant soumises à aucune modification matérielle et/ou traitement thermique, sauf lors de l'incinération des déchets ménagers (H) et/ou après l'incinération et le traitement conventionnel des déchets ménagers (H).
